# EUROPÄISCHE PATENTANMELDUNG

(11) **EP 3 059 560 A1**
(43) Veröffentlichungstag der Anmeldung: **24.08.2016**
(21) Anmeldenummer: 16151446.8
(22) Anmeldetag: 15.01.2016
(51) Int. Cl.: G01F 23/284, B66F 17/00

(54) **ÜBERWACHUNGSEINRICHTUNG FÜR DEN BELADUNGSZUSTAND EINES SCHÜTTGUTFAHRZEUGS**

(30) Priorität: 18.02.2015 DE 102015001905
(71) Anmelder: Wacker Neuson Linz GmbH, 4063 Hörsching (AT)
(72) Erfinder: Plomberger, Robert, 4800 St. Georgen im Attergau (AT); Neuhauser, Bernd, 7020 Loipersbach (AT)
(74) Vertreter: Müller Hoffmann & Partner

(57) **Zusammenfassung**

Die Erfindung betrifft eine Überwachungseinrichtung für den Beladungszustand eines Schüttgutfahrzeuges. Das Schüttgutfahrzeug (1) weist einen in Fahrtrichtung (2) vor einem Führerstand (3) angeordneten Ladebehälter (4) auf. Die Überwachungseinrichtung umfasst eine Sensorvorrichtung (5), eine Auswerteeinrichtung (6) und eine Steuervorrichtung (7), wobei die Sensorvorrichtung (5) dazu eingerichtet ist, in einem Erfassungsbereich (8) berührungslos eine Schütthöhe von Schüttgut im Ladebehälter (4) zu überwachen und an die Auswerteeinrichtung (6) zu kommunizieren, welche bei erreichen und/oder überschreiten einer definierten Maximalhöhe (10) der Schütthöhe ein Sicherheitssignal (9) an die Steuervorrichtung (7) leitet.

## Beschreibung

Die Erfindung betrifft eine Überwachungseinrichtung für den Beladungszustand eines Schüttgutfahrzeugs nach Anspruch 1.

Schüttgutfahrzeuge werden genutzt, um schüttfähige Güter wie z.B. Erdreich oder Sand zu transportieren. Der übliche Einsatzbereich solcher Fahrzeuge liegt deshalb im Bauwesen, der Landwirtschaft oder im produzierenden Bereich. Die vorliegende Erfindung bezieht sich insbesondere auf Schüttgutfahrzeuge welche einen Ladebehälter aufweisen, der in Fahrtrichtung vor einem Führerstand angeordnet ist. Der Bediener muss deshalb über die geladene Last hinwegsehen können, um das Fahrzeug sicher zu steuern.

Speziell im Bauwesen werden häufig ungeschulte Mitarbeiter eingesetzt, die keine tieferen Kenntnisse der Sicherheitsvorschriften haben. So kann es z.B. vorkommen, dass das Fahrzeug zu hoch beladen wird und ein Fahrer nur noch eine eingeschränkte Sicht auf einen Fahrweg hat.

Eine zu hohe Ladung versperrt jedoch die Sicht des Bedieners auf den Fahrweg, was zu einem hohen Risiko beim Betrieb des Fahrzeugs führt. Ein solches Risiko ist weder für den Bediener noch für einen Arbeitgeber des Bedieners akzeptabel, da dieser ggf. für die Handlungen seines Arbeitnehmers haften muss.

Im Stand der Technik sind Lösungen bekannt, um eine Beladungshöhe zu messen um eine Kollisionsgefahr mit Brücken oder tiefhängenden Ästen zu vermeiden. So wird z.B. in der WO 2015/000839 ein System angegeben, in welchem eine in Fahrtrichtung weisende Kamera ein vor dem Zugfahrzeug liegendes Lichtraumprofil abtastet und mit dem Höhenprofil eines am Zugfahrzeug angehängten Anhängers vergleicht. Um das Höhenprofil des Hängers zu ermitteln, ist eine weitere, entgegen der Fahrtrichtung weisende Kamera am Zugfahrzeug vorgesehen.

Die der vorliegenden Erfindung zu Grunde liegende Aufgabe wird darin gesehen, eine Überwachungseinrichtung für ein Schüttgutfahrzeug bereitzustellen, bei dem die erwähnten Probleme bzw. Risiken nicht oder in einem verminderten Maße auftreten.

Die Aufgabe wird erfindungsgemäß mit der Lehre des Anspruchs 1 gelöst, wobei in den weiteren Patentansprüchen Merkmale aufgeführt sind, die die Lösung in vorteilhafter Weise weiterentwickeln. Ferner wird die Aufgabe durch ein Verfahren zur Überwachung des Beladungszustands nach Anspruch 11 gelöst.

Es wird eine Überwachungseinrichtung für den Beladungszustand eines Schüttgutfahrzeuges vorgeschlagen, wobei das Schüttgutfahrzeug einen in Fahrtrichtung vor einem Führerstand angeordneten Ladebehälter aufweist und die Überwachungseinrichtung eine Sensorvorrichtung, eine Auswerteeinrichtung und eine Steuervorrichtung umfasst. Die Sensorvorrichtung ist dazu eingerichtet, in einem Erfassungsbereich berührungslos eine Schütthöhe von Schüttgut im Ladebehälter zu überwachen und an die Auswerteeinrichtung zu kommunizieren, welche bei erreichen und/oder überschreiten einer definierten Maximalhöhe der Schütthöhe ein Sicherheitssignal an die Steuervorrichtung leitet.

Auf diese Weise kann ein Bediener bei Erreichen der maximalen Schütthöhe gewarnt werden, so dass eine Überladung verhindert wird. Als Maximalhöhe der Schütthöhe kann eine Höhe definiert werden, bei welcher der Bediener eine noch ausreichende Sicht auf den Fahrweg des Fahrzeugs hat.

Als Erfassungsbereich ist insbesondere der Bereich des Ladebehälters definiert, der sich bei Geradeausfahrt in direkter Linie in Fahrtrichtung vor dem Bediener befindet. In der Regel erstreckt sich der Erfassungsbereich deshalb entlang einer Längsachse (d.h. mittig in Linie in Fahrtrichtung) des Ladebehälters.

Fernern kann die Überwachungsvorrichtung eine Sensorvorrichtung aufweisen, die dazu eingerichtet ist eine Störkontur im Erfassungsbereich zu ermitteln, so dass die Auswerteeinrichtung bei vorliegen einer Störkontur das Sicherheitssignal ausgeben kann. Die Sensorvorrichtung kann Stereokameras mit einem Bildverarbeitungssystem, und/oder abtastende Laserentfernungsmesser und/oder PMD-Kameras und/oder Ultraschallsensoren umfassen. Die genutzten Sensoren arbeiten berührungslos, d.h. sie arbeiten insbesondere optisch und/oder akustisch. Die Daten der Sensorvorrichtung werden an die Auswerteeinrichtung übermittelt, so dass dieses ermitteln kann, ob eine Maximalhöhe der Schütthöhe erreicht und/oder überschritten ist und ein Sicherheitssignal ausgegeben werden muss. Als Störkontur wird bezeichnet, was im Erfassungsbereich der Sensorvorrichtung über die Maximalhöhe übersteht bzw. diese überragt. Üblicherweise handelt es sich dabei um das geladene Material bzw. Schüttgut.

Als vorteilhaft hat es sich erwiesen, wenn die Sensorvorrichtung derart positioniert ist, dass der Erfassungsbereich der Sensorvorrichtung lediglich die Schütthöhe auf Höhe der Maximalhöhe und/oder darüber überwacht. Auf diese Weise muss nicht die gesamte Ladehöhe überwacht werden, sondern es wird nur die tatsächlich relevante Ladehöhe ermittelt, die sich im Bereich der Maximalhöhe einstellt. Es ergibt sich dadurch ein vereinfachter Aufbau der Sensorvorrichtung. Es wäre beispielsweise ausreichend, einen einfachen Sensor zu nutzen, der lediglich erkennen kann, ob sich innerhalb des Erfassungsbereichs eine Störkontur befindet oder nicht.

Als weitere Ausführungsform ist denkbar, dass der Ladebehälter in Fahrtrichtung vor dem Führerstand in Blickrichtung des Bedieners positioniert ist, wobei der Erfassungsbereich der Sensorvorrichtung derart gewählt ist, dass der Erfassungsbereich mit einem in Fahrtrichtung gerichteten Blickwinkel eines Bedieners zumindest bereichsweise übereinstimmt. Der Blickwinkel des Bedieners erstreckt sich von seiner erhöhten Position auf dem Führerstand in Fahrtrichtung nach vorne über den Ladebehälter hinweg nach unten auf den Fahrweg.

Bevorzugt ist, dass bei Vorliegen des Sicherheitssignals die Steuervorrichtung ein Warnsignal ausgibt, welches ein optisches und/oder akustisches Signal sein kann. Zudem kann bei Vorliegen des Sicherheitssignals mittels der Steuervorrichtung eine Arbeitsfunktion des Schüttgutfahrzeugs gesperrt sein. Die Arbeitsfunktion kann beispielsweise ein Starten des Motors, das Einlegen eines Ganges, das Lösen einer Bremse, oder eine Fahrbewegung sein.

Ferner kann eine Speichereinrichtung vorgesehen sein, die dazu eingerichtet ist, um Zustandsdaten der Überwachungsvorrichtung und/oder des Schüttgutfahrzeugs zu speichern. Solche Zustandsdaten können beispielsweise die Messwerte der Sensorvorrichtung, das Vorliegen des Sicherheitssignals oder eine Bedienereingabe des Fahrers sein (Starten des Motors, Bedienen von Schaltern, etc).

Als besonders vorteilhaft hat es sich erwiesen, wenn die Sensorvorrichtung an einem Überrollschutzbügel, am Führerstand und/oder am Ladebehälter positioniert ist. Auf diese Weise hat die Sensorvorrichtung einen freien Blick auf den relevanten Bereich des Ladebehälters.

Eine bevorzugte Ausführungsform der Erfindung ergibt sich, wenn die Auswerteeinrichtung derart ausgebildet ist, dass ein Sicherheitssignal nur ausgegeben wird, wenn eine Störkontur für eine definierte Mindestzeitdauer erkannt wird. Auf diese Weise werden falsche Erkennungen der Störkontur vermieden. Beispielsweise kann es beim Beladen des Ladebehälters notwendig sein, eine Baggerschaufel über den Ladebehälter zu schwenken und zu entleeren. Um kein falsches Erkennungssignal auszugeben, wird das Sicherheitssignal erst ausgegeben, wenn eine Störkontur über einen vorgegebenen Zeitraum erkannt wird.

Ferner umfasst die erfindungsgemäße Lösung ein Verfahren zur Überwachung eines Beladungszustands mit einer zuvor vorgestellten Überwachungsvorrichtung, umfassend die Schritte ermitteln einer Schütthöhe in einem Ladebehälter eines Fahrzeugs mittels einer Sensorvorrichtung und erzeugen eines Messsignals, übermitteln des Messsignals an eine Auswerteeinrichtung und ermitteln ob eine definierte Maximalhöhe der Schütthöhe erreicht und/oder überschritten ist und bei erreichen und/oder überschreiten der Maximalhöhe der Schütthöhe ausgeben eines Sicherheitssignals an eine Steuervorrichtung.

Anhand der Abbildungen wird ein Ausführungsbeispiel der Erfindung näher erläutert. Es zeigen:
- Fig. 1: eine schematische Seitenansicht eines Schüttgutfahrzeugs mit einem Erfassungsbereich der Sensorvorrichtung

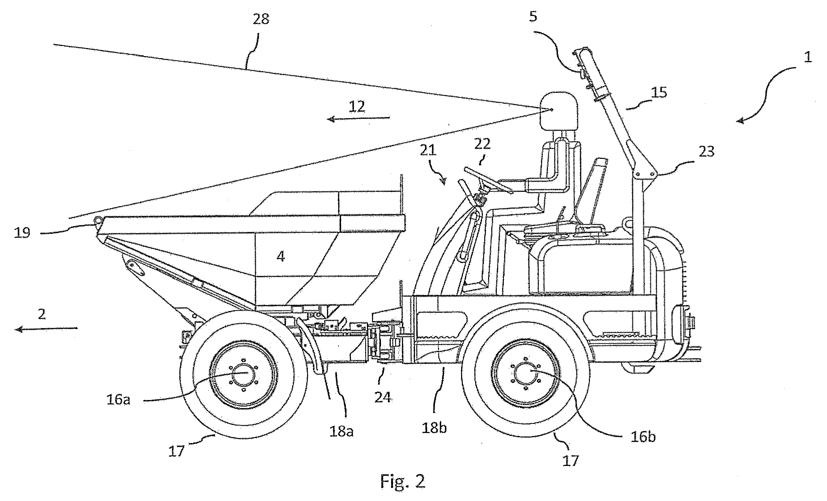

- Fig. 2: eine schematische Seitenansicht des Schüttgutfahrzeugs mit einem Bediener und einem Blickwinkel des Bedieners

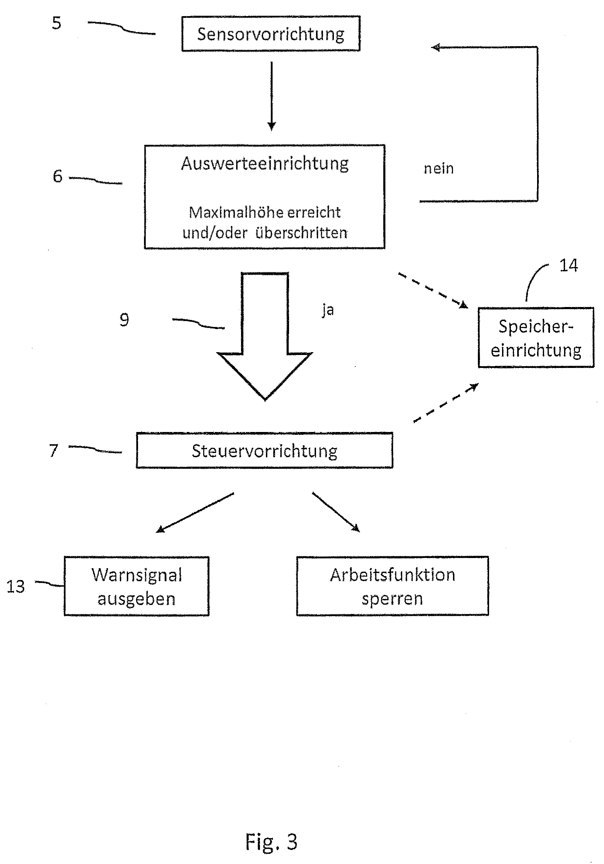

- Fig. 3: einen beispielhaften schematischen Ablauf des Verfahrens zur Überwachung des Beladungszustands

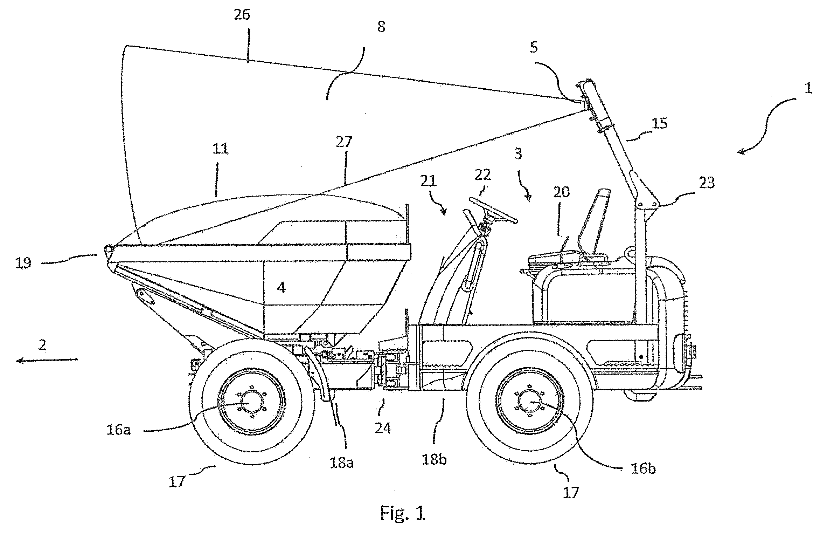

Die Figur 1 zeigt ein Fahrzeug 1 zum Transport von Schüttgut. Hierzu umfasst das Fahrzeug 1 einen Ladebehälter, bzw. Schüttgutbehälter 4, in welchem loses Material wie z.B. Erde, Sand, Kies u.ä. transportiert werden kann. Der Ladebehälter 4 ist in Fahrtrichtung 2 gesehen vor dem Führerstand 3 angeordnet. Der Fahrer bzw. Bediener muss also in Vorwärtsfahrt über den Ladebehälter 4 und die Ladung blicken, um den Fahrweg zu sehen.

Das Fahrzeug 1 ist mit zwei Achsen 16a, 16b ausgerüstet, die jeweils zwei Räder 17 tragen. Die Achsen 16a, 16b sind jeweils an einem vorderen 18a und einem hinteren Rahmenteil 18b des Fahrzeugs befestigt. Beide Rahmenteile 18a, 18b sind mittels eines Knickgelenks 24 miteinander verbunden, so dass das Fahrzeug gelenkt werden kann. Alternativ wäre denkbar den Rahmen starr auszuführen und mindestens eine der Achsen lenkbar zu gestalten, was jedoch in den Figuren nicht gezeigt ist.

Der Ladebehälter 4 ist eine nach oben offene Mulde, so dass ein Beladevorgang von oben erfolgt. Um den Ladebehälter zu entleeren, kann dieser mittels eines Hydraulikzylinders angehoben werden, so dass die Ladung nach vorne über eine Schüttkante 19 ausgeworfen wird. Alternativ kann der Ladebehälter auch drehbar auf dem Rahmen angeordnet sein, so dass eine Entladung sowohl in Fahrtrichtung nach vorne als auch wahlweise zu beiden Seiten erfolgen kann. Die Beladung erfolgt üblicherweise jedoch in der Grundposition des Ladebehälters, d.h. bei in Fahrtrichtung 2 ausgerichtetem und abgesenktem Ladebehälter 4. Zudem erfolgt die Beladung üblicherweise in einer Geradeausstellung des Fahrzeugs, d.h. die Knicklenkung 24 befindet sich einer Mittelstellung bzw. Neutralposition, so wie dies bei Geradeausfahrt der Fall ist.

Der Ladebehälter 4 ist auf dem vorderen Rahmenteil 18a angeordnet. Der Führerstand 3 ist auf dem hinteren Rahmenteil 18b angeordnet. Ferner sind am hinteren Rahmenteil 18b im gezeigten Ausführungsbeispiel auch der Antriebsmotor und die Hydraulikaggregate untergebracht. Der Führerstand 3 umfasst einen Fahrersitz 20 und eine Bedienkonsole 21. Die Bedienkonsole 21 ist als aufrecht stehendes Element auf dem hinteren Rahmen 18b angeordnet und trägt unter anderem das Lenkrad 22. Auf dem hinteren Rahmen 18b ist ferner eine Überrollschutzvorrichtung 15 in Form eines Überrollbügels angeordnet, der ein Rollen des Fahrzeugs im Falle eines Umkippens verhindert. Die Überrollschutzvorrichtung 15 erstreckt sich vertikal über den Fahrersitz und kann beim Transport des Fahrzeugs zur Verringerung der Transporthöhe mittels eines Scharniers 23 abgeklappt werden.

Der Fahrer bzw. Bediener 25 sitzt beim Betrieb des Fahrzeugs bzw. zumindest während der Fahrt auf dem Fahrersitz 20. Der Fahrer 25 blickt dabei in Blickrichtung 12, welche mit der Fahrtrichtung 2 übereinstimmt. Der Fahrersitz ist derart positioniert, dass der Bediener über den leeren Ladebehälter 4 hinwegsehen kann und sich ein ausreichender Blickwinkel 28 ergibt, der ausreicht, um den Fahrweg ausreichend zu sehen und das Fahrzeug sicher zu bewegen.

Im gezeigten Ausführungsbeispiel ist die Sensorvorrichtung 5 an der Überrollschutzvorrichtung 15 angeordnet und derart ausgerichtet, dass sich der Erfassungsbereich 8 kegelförmig nach vorne über den Kopf des Fahrers hinweg oder seitlich daran vorbei in Richtung des Ladebehälters 4 erstreckt. Der genutzte Sensor ist bevorzugt derart ausgewählt, dass der maximale Erfassungsabstand zumindest den Bereich zwischen dem Sensor und der Schüttkante 19 umfasst. Alternativ kann der maximale Erfassungsabstand zumindest den Bereich zwischen dem Sensor und der halben Länge des Ladehälters überspannen.

Die Sensorvorrichtung ist bevorzugt innerhalb eines geschützten Bereichs der Überrollschutzvorrichtung 15 angeordnet. Die Überrollschutzvorrichtung ist im gezeigten Ausführungsbeispiel als U-förmig gebogener Rahmen ausgebildet. Die Sensorvorrichtung ist dabei innerhalb des U-förmigen Rahmens angeordnet, d.h. geschützt zwischen zwei Rahmenelementen, die im Wesentlichen in einem Winkel von 90° zueinander stehen. Die beiden Rahmenelemente schützen die Sensorvorrichtung damit von zwei Seiten.

Der Erfassungsbereich 8 ist im gezeigten Ausführungsbeispiel kegelförmig gewählt. In einer Seitenansicht ergibt sich damit ein Erfassungsbereich 8 in Form eines Korridors, welcher von einem oberen Grenzbereich 26 und einem unteren Grenzbereich 27 begrenzt wird. Der untere Grenzbereich 27 ist derart ausgerichtet, dass dieser auf der gewünschten Maximalhöhe verläuft. Die Maximalhöhe wird also in diesem Ausführungsbeispiel mittels des unteren Grenzbereichs 27 des Sensors definiert. Auf diese Weise wird eine über die Maximalhöhe hinausragende Ladung als Störkontur erkannt. Der obere Grenzbereich 26 kann derart gewählt werden, dass sich der Erfassungsbereich 27 auch über die Gesamthöhe des Fahrzeugs hinaus erstreckt. Auf diese Weise kann sowohl eine Überwachung der maximalen Ladungshöhe als auch eine Überwachung des vor dem Fahrzeugs liegenden Umgebungsprofils erfolgen. Beispielsweise können Äste oder zu tiefe Durchfahrten erkannt werden.

Alternativ kann auch ein Sensor genutzt werden, dessen Erfassungsbereich strahl- bzw. linienförmig verläuft. Dabei kann der strahlförmige Erfassungsbereich in Höhe der Maximalhöhe ausgerichtet sein. Dabei würde ein Punkt im Ladebehälter als Bestimmungspunkt der Ladehöhe ausgewählt. Ebenfalls denkbar wäre, dass ein Sensor gewählt wird, dessen Erfassungsbereich in Form einer aufgespannten Ebene verläuft.

Unabhängig von der Wahl des genutzten Sensors und des sich einstellenden Erfassungsbereichs, d.h. kegelförmig, strahlförmig oder in Form einer Ebene, wird die Maximalhöhe durch den Erfassungsbereich der Sensorvorrichtung definiert.

Der Bediener hat in seiner Arbeitsposition, d.h. sitzend auf dem Fahrersitz 20 mit Blick in Fahrtrichtung (Blickrichtung 12) einen Blickwinkel 28 auf den Fahrweg. Der Blickwinkel auf den Fahrweg wird durch die Schüttkante 19 begrenzt. Der Blickwinkel 28 des Fahrers und der Erfassungsbereich 8 der Sensorvorrichtung verlaufen in gleiche Richtung und überschneiden sich.

Im Folgenden wird die Funktionsweise der Überwachungsvorrichtung erläutert. Die Überwachungsvorrichtung kann unabhängig von den Arbeitsfunktionen (z.B. Fahrbewegung, Kippbewegung, Motorlauf) des Fahrzeugs aktiviert werden. Auf diese Weise kann das Fahrzeug beispielsweise unter Nutzung der Überwachungsvorrichtung beladen werden, ohne dass hierzu der Motor eingeschaltet sein muss.

Die Sensorvorrichtung 5 ist mit dem Erfassungsbereich 8 auf den Ladebehälter bzw. einen Bereich oberhalb des Ladebehälters gerichtet und kommuniziert mit der Auswerteeinrichtung. Die Auswerteeinrichtung ist dazu eingerichtet, zu entscheiden, ob die Sensorvorrichtung eine Störkontur ermittelt hat. Die Auswerteeinrichtung kann auch integral mit der Sensorvorrichtung verbunden sein, insbesondere können Sensor- und Auswerteeinrichtung derart verbunden sein, dass die einzelnen Funktionen nicht klar zu unterscheiden sind. Beispielsweise könnte ein Sensor derart ausgerichtet sein, dass lediglich die Maximalhöhe und ggf. darüber überwacht wird. Auf diese Weise wäre ein erkennen des Erreichens oder Überschreitens der Maximalhöhe gleichzeitig auch die Auswertung, so dass eine separate Auswerteeinrichtung verzichtbar ist.

Erkennt die Auswerteeinrichtung das Erreichen oder Überschreiten der Maximalhöhe, gibt diese ein Sicherheitssignal 9 an die Steuereinrichtung 7 aus. Das Sicherheitssignal 9 kann die Steuereinrichtung 7 dazu veranlassen, ein Warnsignal auszugeben. Hierzu kann beispielsweise eine Alarmleuchte oder Alarmhupe am Fahrzeug vorgesehen sein. Bevorzugt befindet sich in Nähe der Sensorvorrichtung eine Alarmleuchte, die z.B. einem Fahrer eines Radladers oder Baggers signalisiert, dass die Beladung zu hoch erfolgt ist. Zudem kann auch am Führerstand 3 eine Alarmleuchte angeordnet sein, die dem Bediener signalisiert, dass eine Maximalhöhe der Ladung überschritten ist.

Ferner kann die Steuereinrichtung 7 eine Arbeitsfunktion des Fahrzeugs sperren. Auf diese Weise wird verhindert, dass das Fahrzeug genutzt wird, wenn ein unzulässiger Beladungszustand vorliegt.

Die Sperrung der Arbeitsfunktion und/oder das Aufleuchten der Alarmleuchte kann durch eine Quittierung des Bedieners aufgehoben werden. Dies kann beispielsweise mittels eines Schalters erfolgen. Der Bediener gibt damit zu verstehen, dass der unzulässige Beladungszustand durch ihn erkannt wurde und er das Fahrzeug dennoch nutzen möchte. Die Überwachungsvorrichtung, bzw. das Sicherheitssignal wird für eine vorgegeben Zeitdauer, z.B. 30 Sekunden, bevorzugt eine Minute deaktiviert.

Die Überwachungsvorrichtung kann ferner eine Speichereinrichtung aufweisen, in welchen Zustandsdaten der Überwachungsvorrichtung und/oder des Fahrzeugs gespeichert werden können. Solche Zustandsdaten können umfassen: den Beladungszustands, ein Vorliegen des Sicherheitssignals, eine Aktivierung der Alarmleuchte und/oder Alarmhupe, eine Sperrung von Arbeitsfunktionen, eine Quittierung des Bedieners, Zeit- und Datumsangaben zu den vorgenannten Daten, ggf. Identitätsdaten des Bedieners u.ä. Der Speicher kann ausgelesen werden, um im Falle eines Unfalls zu klären ob die Überwachungsvorrichtung aktiv war und ob ggf. der Bediener das Signal quittiert oder ignoriert hat.

Alternativ kann auch darauf verzichtet werden Arbeitsfunktionen zu sperren. In diesem Fall kann z.B. bei Vorliegen des Sicherheitssignals und bei Starten des Motors oder Einlegen eines Gangs eine Meldung in der Speichereinrichtung hinterlegt werden.

Die Überwachungsvorrichtung kann dazu ausgelegt sein, das Sicherheitssignal erst nach einer bestimmten Zeitdauer auszugeben. Diese Zeitdauer kann beispielsweise bevorzugt 5 Sekunden, besonders bevorzugt 10 Sekunden betragen.

Um falsche Alarme der Überwachungsvorrichtung zu vermeiden, kann das System in bestimmten Situationen automatisch inaktiv sein. Beispielsweise könnte dies beim Kippen des Ladebehälters sein, bei Kurvenfahrt des knickgelenkten Fahrzeugs, bei Geländefahrt wenn sich das Fahrzeug mittels eines Pendelknickgelenks verwindet, bei abgeklapptem Überrollbügel, oder allgemein während einer Fahrbewegung.

Im Folgenden werden weitere, nicht gezeigte Ausführungsformen beschrieben. Zur obigen Ausführungsform gleiche Elemente werden mit gleichlautenden Bezugsziffern versehen.

Alternativ zur zuvor beschriebenen Ausführungsform kann die Sensoreinrichtung auch an der Bedienkonsole 21 oder am Ladebehälter 4 angeordnet sein.

Bei Befestigung der Sensorvorrichtung 5 an der Bedienkonsole 21 ist diese auf einer vertikalen Höhe der Bedienkonsole 21 angebracht, die über der vertikalen Höhe des oberen Rands des Ladebehälters 4 liegt. Auf diese Weise kann die Sensorvorrichtung 5 ermitteln, ob ein Schüttgut über den oberen Rand des Ladebehälters 4 ragt.

Sofern die Sensorvorrichtung 5 am Ladebehälter 4 angeordnet ist, kann diese auf einem oberen Rand des Ladebehälters 4 angebracht sein. Bevorzugt ist die Sensorvorrichtung dabei im hinteren Bereich des Ladebehälters 4 angeordnet, so dass der Erfassungsbereich sich in Fahrtrichtung nach vorne erstreckt. Anders ausgedrückt, kann die Sensorvorrichtung 5 derart angebracht sein, dass der Sensor nach vorne blickt.

Bevorzugt ist der Sensor in allen zuvor beschriebenen Ausführungsformen waagerecht oder geringfügig nach unten ausgerichtet. Insbesondere sollte der untere Grenzbereich des Erfassungsbereichs waagerecht oder geringfügig nach unten ausgerichtet sein.

Die in den verschiedenen Ausführungsbeispielen beschriebenen Merkmale der Überwachungseinrichtung und des Fahrzeugs können in beliebiger Weise miteinander kombiniert werden.

## Patentansprüche

1. Überwachungseinrichtung für den Beladungszustand eines Schüttgutfahrzeuges (1), wobei
das Schüttgutfahrzeug (1) einen in Fahrtrichtung (2) vor einem Führerstand (3) angeordneten Ladebehälter (4) aufweist und die Überwachungseinrichtung eine Sensorvorrichtung (5), eine Auswerteeinrichtung (6) und eine Steuervorrichtung (7) umfasst, wobei die Sensorvorrichtung (5) dazu eingerichtet ist, in einem Erfassungsbereich (8) berührungslos eine Schütthöhe von Schüttgut im Ladebehälter (4) zu überwachen und an die Auswerteeinrichtung (6) zu kommunizieren, welche bei erreichen und/oder überschreiten einer definierten Maximalhöhe (10) der Schütthöhe ein Sicherheitssignal (9) an die Steuervorrichtung (7) leitet.

2. Überwachungsvorrichtung nach Anspruch 1, wobei
die Sensorvorrichtung (5) dazu eingerichtet ist, eine Störkontur (11) im Erfassungsbereich (8) zu ermitteln und die Auswerteeinrichtung (6) bei Vorliegen einer Störkontur (11) das Sicherheitssignal (9) ausgibt.

3. Überwachungsvorrichtung nach einem der vorhergehenden Ansprüche, wobei
die Sensorvorrichtung (5) derart positioniert ist, dass der Erfassungsbereich (8) der Sensorvorrichtung (5) lediglich die Schütthöhe auf Höhe der Maximalhöhe (10) und/oder darüber überwacht.

4. Überwachungsvorrichtung nach einem der vorhergehenden Ansprüche, wobei
der Ladebehälter (4) in Fahrtrichtung (2) vor dem Führerstand (3) in Blickrichtung (12) des Bedieners positioniert ist, und wobei der Erfassungsbereich (8) der Sensorvorrichtung (5) derart gewählt ist, dass der Erfassungsbereich (8) mit einem Blickwinkel eines Bedieners zumindest bereichsweise übereinstimmt.

5. Überwachungsvorrichtung nach einem der vorhergehenden Ansprüche, wobei
bei Vorliegen des Sicherheitssignals (9) die Steuervorrichtung (7) ein Warnsignal (13)ausgibt, welches ein optisches und/oder akustisches Signal sein kann.

6. Überwachungsvorrichtung nach einem der vorhergehenden Ansprüche, wobei
bei Vorliegen des Sicherheitssignals (9) mittels der Steuervorrichtung (7) eine Arbeitsfunktion des Schüttgutfahrzeugs (1) gesperrt ist.

7. Überwachungsvorrichtung nach einem der vorhergehenden Ansprüche, wobei
eine Speichereinrichtung (14) vorgesehen ist, die dazu eingerichtet ist, um Zustandsdaten der Überwachungsvorrichtung und/oder des Schüttgutfahrzeugs zu speichern.

8. Überwachungsvorrichtung nach einem der vorhergehenden Ansprüche, wobei
die Sensorvorrichtung (5) an einem Überrollschutzbügel (15), am Führerstand (3) und/oder am Ladebehälter (4) positioniert ist.

9. Überwachungsvorrichtung nach einem der vorhergehenden Ansprüche, wobei
die Sensorvorrichtung (5) mindestens einen Sensor, insbesondere einen Ultraschallsensor und/oder Lasersensor und/oder PMD-Kamera und/oder Kamera umfasst.

10. Überwachungsvorrichtung nach einem der vorhergehenden Ansprüche, wobei
die Auswerteeinrichtung (6) derart ausgebildet ist, dass ein Sicherheitssignal (9) nur ausgegeben wird, wenn eine Störkontur (11) für eine definierte Mindestzeitdauer erkannt wird.

11. Verfahren zur Überwachung eines Beladungszustands mit einer Überwachungsvorrichtung nach einem der Ansprüche 1 bis 10, umfassend
die Schritte, ermitteln einer Schütthöhe in einem Ladebehälter (4) eines Fahrzeugs (1) mittels einer Sensorvorrichtung (5) und erzeugen eines Messsignals, übermitteln
des Messsignals an eine Auswerteeinrichtung (6) und ermitteln
ob eine definierte Maximalhöhe (10) der Schütthöhe erreicht und/oder überschritten ist, bei erreichen und/oder überschreiten der Maximalhöhe (10) der Schütthöhe ausgeben eines Sicherheitssignals (9) an eine Steuervorrichtung (7).
